# DEMANDE DE BREVET EUROPEEN

(11) **EP 0 931 953 A1**
(43) Date de publication de la demande: **28.07.1999**
(21) Numéro de dépôt: 98403255.7
(22) Date de dépôt: 22.12.1998
(51) Int. Cl.: F16D 43/24, E05F 15/10

(54) **Dispositif d'entainement avec embrayage à inertie**

(30) Priorité: 22.01.1998 FR 9800648
(71) Demandeur: VALEO SECURITE HABITACLE, 94000 Créteil (FR)
(72) Inventeur: Dupont, Patrick, 80133 Noyelles sur Mer (FR)
(74) Mandataire: Peuscet, Jacques

(57) **Abrégé**

Dispositif d'entraînement de mécanisme comportant un moteur, une pignonerie et une transmission automatiquement embrayable et/ou débrayable ; la transmission comporte un crabot (4) monté à coulissement sur une pièce d'entraînement (3) portée par l'arbre (2) d'un moteur (1), cette pièce d'entraînement (3) étant munie d'au moins une rampe double en V (3a, 3b) dans laquelle peut coulisser un ergot (6), solidaire du crabot (4), la masse de ce dernier étant telle que, lorsque la pièce d'entraînement (3) est mise en rotation, le crabot (4) présente, par inertie, une résistance à la rotation, qui provoque le glissement de l'ergot (6) dans l'une ou l'autre des rainures (3a, 3b) et donc un déplacement longitudinal du crabot (4) à l'encontre d'un ressort de rappel (9), qui provoque la mise en prise de la pignonerie ; cette mise en prise demeure active tant que le moteur (1) est alimenté et cesse par l'action du ressort de rappel (9) dès que le moteur n'est plus alimenté.

## Description

La présente invention est relative à un micromécanisme d'asservissement du type usuellement appelé "actionneur" et qui peut servir à la fermeture/ouverture de porte ou de fenêtre, au verrouillage à distance de porte, fenêtre, panneau ou analogue.

Ce type d'actionneur est d'un usage très répandu dans l'automobile, mais l'invention n'est pas limitée à ce genre d'application et peut être utilisée dans les habitations ainsi que dans les chaînes d'automatisme de machines. Dans les serrures de véhicule, de tels actionneurs peuvent être utilisés pour des fonctions de condamnation mais aussi pour des fonctions d'ouverture.

Les actionneurs comportent, d'une part, un moteur électrique et, d'autre part, des moyens mécaniques de mise en oeuvre comportant, en général, une pignonerie de démultiplication, étant donné que les moteurs électriques courants ont une vitesse de rotation relativement élevée. D'une manière générale, lorsque l'organe commandé arrive en fin de course (dans un sens ou dans l'autre), il est immobilisé par une butée, ce qui provoque une augmentation de la tension d'alimentation du moteur, augmentation qui provoque, par tout relai approprié, une interruption de l'alimentation électrique du moteur.

Il peut cependant s'avérer préférable de disposer, entre le moteur et les pièces entraînées, un dispositif d'embrayage/débrayage, qui fonctionne automatiquement de telle sorte que, lorsque le moteur n'est pas alimenté, le mécanisme entraîné soit mécaniquement déconnecté du moteur et soit automatiquement reconnecté lorsque le moteur est alimenté. C'est le cas, notamment, dans des serrures de véhicule lorsque l'on désire permettre des fonctions manuelles ou de secours, car on évite ainsi, par le débrayage précité, d'avoir, pour réaliser la fonction manuelle ou de secours, à ré-entraîner en réversibilité toute la démultiplication et le moteur, ce qui réduit de façon sensible les efforts à exercer par l'utilisateur.

La présente invention concerne un mécanisme permettant d'obtenir un tel résultat.

La présente invention a donc pour objet un dispositif d'entraînement comportant un moteur, notamment électrique, une pignonerie et une transmission de mouvement automatiquement embrayable et/ou débrayable, caractérisé par le fait que ladite transmission comporte un crabot monté à coulissement sur une pièce d'entraînement portée par l'arbre du moteur, cette pièce d'entraînement étant munie d'au moins une rampe double constituée par deux rainures disposées en V, rainures dans lesquelles peut coulisser un ergot solidaire du crabot, la masse de ce dernier étant telle que, lorsque la pièce d'entraînement est mise en rotation, le crabot présente, par inertie, une résistance à la rotation, qui provoque le glissement de l'ergot dans l'une ou l'autre des rainures de la rampe et donc un déplacement longitudinal du crabot à l'encontre d'un ressort de rappel, déplacement qui provoque la mise en prise de la pignonerie, cette mise en prise demeurant active tant que le moteur est entraîné en rotation et cessant par l'action du ressort de rappel dès que le moteur n'est plus entraîné en rotation.

Selon un premier mode de réalisation, le crabot est solidaire d'un pignon, qui vient directement en prise sur l'un des pignons du mécanisme à entraîner, c'est-à-dire qui fait partie de la pignonerie du dispositif. Dans ce cas, le ressort de rappel est interposé entre le crabot et un élément fixe par rapport au moteur.

Selon un deuxième mode de réalisation, le pignon moteur de la pignonerie est engrené en permanence sur ladite pignonerie et est muni d'au moins une branche radiale avec laquelle au moins un doigt porté par le crabot vient coopérer lorsque le moteur est mis en action ; la (ou les) branche(s) présente(nt) une certaine élasticité de façon à amortir les chocs dûs à des démarrages ou arrêts provoquant un contact brutal entre le(s) doigt(s) et la (les) branche(s) ; le ressort de rappel est interposé entre la pièce d'entraînement et le crabot.

Avantageusement, les deux rainures de chaque rampe double comportent, au voisinage de la zone où elles se rejoignent, des portions symétriques par rapport à un plan passant par l'axe de l'arbre du moteur ; les rainures de chaque rampe double comportent, au voisinage de la zone où elles se rejoignent, des portions hélicoïdales.

De préférence, l'une au moins des rainures en V de la rampe double se prolonge par un tronçon qui débouche sur celle des faces d'extrémité de la pièce d'entraînement₁ qui est la plus proche du crabot ; pour le deuxième mode de réalisation, on prévoit que la pièce d'entraînement porte un tronçon, qui est relié aux deux rainures en V à leur point de jonction ; en outre, le tronçon précité est avantageusement parallèle à l'axe de l'arbre du moteur.

Pour mieux faire comprendre l'objet de l'invention, on va décrire ci-après, à titre d'exemples purement illustratifs et non limitatifs, deux modes de réalisation représentés sur le dessin annexé.

Sur ce dessin :
- la figure 1 est une vue schématique en élévation latérale d'un premier mode de réalisation de l'invention ;
- la figure 2 est une vue partielle, en éclaté et en perspective, du dispositif de la figure 1 ;
- la figure 3 est une vue en élévation latérale d'un deuxième mode de réalisation de l'invention ;
- la figure 4 est une vue partielle, en éclaté et en perspective, du dispositif de la figure 3 ;
- la figure 5 est une vue d'un détail des figures 3 et 4.

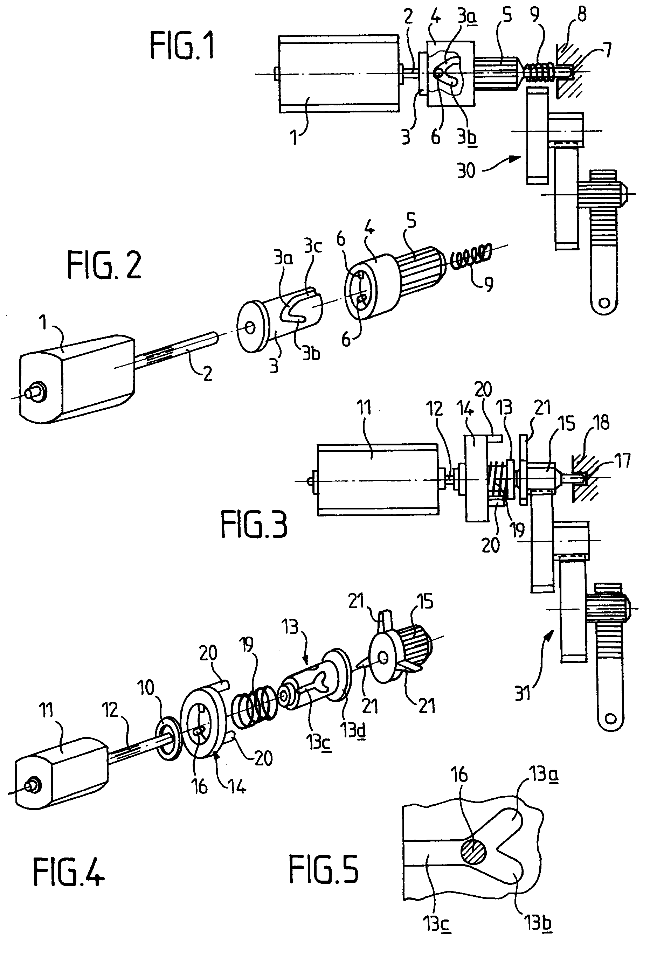

En se reportant aux figures 1 et 2, on voit que le dispositif selon l'invention comporte un moteur électrique 1, dont l'arbre 2 porte une pièce cylindrique 3. Sur la pièce 3, dite pièce d'entraînement, peut coulisser une bague 4, faisant office de crabot, à laquelle est fixée un pignon 5.

La pièce 3 comporte deux rainures hélicoïdales en V 3a et 3b. Un seul ensemble de rainures 3a et 3b est visible sur les figures 1 et 2 mais il peut y en avoir plusieurs, de préférence trois ensembles disposés à 120°. La paroi interne de la bague 4 faisant crabot comporte autant d'ergots 6 qu'il y a d'ensembles de rainures 3a, 3b. Dans l'exemple représenté, il y a trois ergots 6 disposés à 120°.

L'arbre 2 du moteur 1 est d'une longueur telle qu'il traverse la pièce d'entraînement 3, le crabot 4, le pignon 5, son extrémité reposant dans un logement 7 (muni éventuellement d'un palier), porté par un élément fixe 8 du bâti, qui porte le moteur 1. Entre le bâti 8 et le pignon 5 est disposé un moyen de rappel qui peut être, comme dans l'exemple représenté, un ressort de compression 9.

Lorsque les pièces sont au repos, les ergots 6 sont chacun au fond du V formé par les rainures hélicoïdales 3a et 3b. De préférence, pour permettre le montage des pièces, l'une des rainures 3a ou 3b (3a dans l'exemple représenté) est prolongée jusqu'à l'extrémité 3c de la pièce 3, qui coopère avec le crabot 4. Cette pièce 3 est enfilée sur l'arbre 2 et porte des cannelures venant s'engager sur des cannelures correspondantes de l'arbre 2.

Lorsque le moteur 1 est alimenté, son arbre 2 entraîne en rotation la pièce 3. Etant donné que les ergots 6 du crabot 4 sont au fond des rainures 3a, 3b en raison de l'action du ressort 9, ce crabot 4 pourrait être entraîné en rotation, mais du fait de sa masse, il oppose une certaine inertie à cet entraînement et cela a pour conséquence que les ergots 6 glissent dans les rainures 3a ou 3b suivant le sens de rotation, glissement qui provoque un mouvement du crabot 4 et du pignon 5, qui en est solidaire, jusque vers le premier pignon de la pignonerie 30 représentée.

L'embrayage est alors réalisé et le moteur 1 entraîne ladite pignonerie 30 jusqu'à ce que le moyen mécanique entraîné (non représenté) arrive en fin de course. Le moteur étant toujours alimenté pendant un certain temps, dû à la temporisation, l'effort des ergots 6 dans les rainures 3a (ou 3b) est égal au couple du moteur 1 bloqué, couple qui est suffisant pour maintenir les pièces en position embrayée. Quand l'alimentation est coupée, le couple disparaît et le ressort 9 ramène le pignon 5 et le crabot 4 en position d'origine.

La pignonerie destinée à entraîner les moyens mécaniques (de fermeture, d'ouverture ou autres) est alors débrayée et ces moyens mécaniques peuvent être actionnés sans effort par tout dispositif manuel ou de secours.

Les figures 3 à 5 représentent un second mode de réalisation, dans lequel le mécanisme de crabotage comporte des éléments élastiques destinés à prévenir toute casse lors de démarrages ou d'arrêts brutaux et dans lequel les différents constituants identiques à la première forme de réalisation ont les mêmes repères augmentés de 10.

Sur l'arbre 12 du moteur 11, est montée une pièce d'entraînement 13, pourvue de plusieurs rampes hélicoïdales doubles constituées chacune de deux rainures en V 13a, 13b prolongées par un tronçon de rainure 13c arrivant à la base du V, ce tronçon 13c ayant pour but de permettre aux ergots 16 du crabot 14 de pénétrer jusqu'à la base de chaque V lors du montage.

Le crabot 14 est constitué par une bague enfilée sur la pièce 13 et portant des ergots 16 venant s'engager dans les tronçons 13c. Le crabot 14 est serré entre une rondelle 10, sertie sur un épaulement de la pièce 13, et un ressort de compression 19 prenant appui sur une collerette 13d solidaire de la pièce 13.

Au repos, les pièces sont mises en position de manière telle que, comme cela est représenté sur la figure 5, chaque ergot 16 soit à la base du V formé par les rainures 13a, 13b. Comme dans le cas précédent, lorsque le moteur 11 est alimenté, les ergots 16 se déplacent dans les rainures 13a ou 13b, suivant le sens de rotation, en comprimant le ressort 19.

Selon ce deuxième mode de réalisation, le crabot 14 (équivalent au crabot 4) n'est pas solidaire du pignon 15 qu'il doit entraîner. Ce pignon 15 est, en permanence, en prise avec la pignonerie 31, dont il fait partie, comme cela est illustré figure 3. Le crabot 4 comporte une pluralité de doigts 20 auxquels correspondent un nombre égal de branches radiales 21 solidaires du pignon 15. Les branches radiales 21 ont une certaine élasticité, ce qui absorbe les chocs lors des démarrages ou arrêts brutaux.

De façon analogue à l'exemple précédent, lorsque le mécanisme entraîné arrive en fin de course, le moteur 11 est bloqué mais toujours alimenté : les doigts 20 du crabot 14 exercent sur les branches 21 un effort égal au couple du moteur bloqué. Dès que l'alimentation est coupée, ce couple disparaît et le ressort 19 repousse le crabot, ce qui dégage les doigts 20 des branches 21 et ramène les ergots 16 au fond du V formé par les rainures 13a, 13b. Le mécanisme actionné par le moteur 11 est alors débrayé et peut être actionné manuellement ou en secours sans que l'utilisateur n'ait à excercer un effort important.

Les dispositifs, qui viennent d'être décrits, peuvent avantageusement être utilisés dans des serrures électriques pour ouvrants de véhicule automobile.

## Revendications

1. Dispositif d'entraînement de mécanisme comportant un moteur (1, 11), une pignonerie (30, 31) et une transmission de mouvement automatiquement embrayable et/ou débrayable, caractérisé par le fait que ladite transmission comporte un crabot (4, 14) monté à coulissement sur une pièce d'entraînement (3, 13) portée par l'arbre (2, 12) du moteur (1, 11), cette pièce d'entraînement (3, 13) étant munie d'au moins une rampe double constituée par deux rainures (3a, 3b ; 13a, 13b) disposées en V, rainures dans lesquelles peut coulisser un ergot (6, 16) solidaire du crabot (4, 14), la masse de ce dernier étant telle que, lorsque la pièce d' entraînement (3, 13) est mise en rotation, le crabot (4, 14) présente, par inertie, une résistance à la rotation, qui provoque le glissement de l'ergot (6, 16) dans l'une ou l'autre des rainures (3a, 13a ; 3b, 13b) de la rampe et donc un déplacement longitudinal du crabot (4, 14) à l'encontre d'un ressort de rappel (9, 19), déplacement qui provoque la mise en prise de la pignonerie, cette mise en prise demeurant active tant que le moteur (1, 11) est entraîné en rotation et cessant par l'action du ressort de rappel (9 , 19) dès que le moteur n'est plus entraîné en rotation.

2. Dispositif selon la revendication 1, caractérisé par le fait que le crabot (4) est solidaire d'un pignon (5) faisant partie de la pignonerie du dispositif.

3. Dispositif selon la revendication 2, caractérisé par le fait que le ressort de rappel (9) est interposé entre le crabot (4) et un élément (8) fixe par rapport au moteur (1).

4. Dispositif selon la revendication 1, caractérisé par le fait que le pignon moteur (15) de la pignonerie (31) est engrené en permanence sur ladite pignonerie et est muni d'au moins une branche (21) radiale avec laquelle au moins un doigt (20), porté par le crabot (14) vient coopérer lorsque le moteur (11) est mis en action.

5. Dispositif selon la revendication 4, caractérisé par le fait que la (ou les) branche(s) (21) présente(nt) une certaine élasticité de façon à amortir les chocs dûs à des démarrages ou arrêts provoquant un contact brutal entre le(s) doigt(s) (20) et la (les) branche(s) (21).

6. Dispositif selon l'une des revendications 4 ou 5, caractérisé par le fait que le ressort de rappel (19) est interposé entre la pièce d'entraînement (13) et le crabot (14).

7. Dispositif selon l'une des revendications 1 à 6, caractérisé par le fait que les deux rainures (3a, 3b ; 13a, 13b) de chaque rampe double comportent, au voisinage de la zone où elles se rejoignent, des portions symétriques par rapport à un plan passant par l'axe de l'arbre (2, 12) du moteur (1, 11).

8. Dispositif selon l'une des revendications 1 à 7, caractérisé par le fait que les rainures (3a, 3b ; 13a, 13b) de chaque rampe double comportent, au voisinage de la zone où elles se rejoignent, des portions hélicoïdales.

9. Dispositif selon l'une des revendications 1 à 8, caractérisé par le fait que l'une au moins des rainures en V (3a, 3b ; 13a, 13b) de la rampe double se prolonge par un tronçon (3c, 13c) qui débouche sur celle des faces d'extrémité de la pièce d'entraînement (3, 13), qui est la plus proche du crabot (4, 14).

10. Dispositif selon la revendication 9 prise en combinaison avec l'une des revendications 4 à 6, caractérisé par le fait que la pièce d'entraînement (13) porte un tronçon (13c), qui est relié aux deux rainures en V (13a, 13b) à leur point de jonction.

11. Dispositif selon l'une des revendications 9 ou 10, caractérisé par le fait que le(s) tronçon(s) (3c, 13c), qui prolonge(nt) les rainures en V d'une rampe double, est (sont) parallèle(s) à l'axe de l'arbre (2, 12) du moteur (1, 11).

12. Dispositif selon l'une des revendications 1 à 11, caractérisé par le fait que le moteur est un moteur électrique (1, 11).
